(19) **Europäisches Patentamt European Patent Office Office européen des brevets**

(11) **EP 1 676 237 B1**

(12) **EUROPEAN PATENT SPECIFICATION**

(45) Date of publication and mention
of the grant of the patent:
**21.04.2010 Bulletin 2010/16**

(21) Application number: **04764748.2**

(22) Date of filing: **02.09.2004**

(51) Int Cl.:
**G06T 7/00** (2006.01)

(86) International application number:
**PCT/EP2004/009789**

(87) International publication number:
**WO 2005/041127 (06.05.2005 Gazette 2005/18)**

(54) **METHOD AND DEVICE FOR DETECTING THE ORIENTATION OF AN IMAGE**

VERFAHREN UND EINRICHTUNG ZUR ERKENNUNG DER ORIENTIERUNG EINES BILDES

PROCEDE ET DISPOSITIF POUR DETECTER L'ORIENTATION D'UNE IMAGE

(84) Designated Contracting States:
**DE FR GB**

(30) Priority: **23.10.2003 FR 0312386**

(43) Date of publication of application:
**05.07.2006 Bulletin 2006/27**

(73) Proprietor: **Thomson Licensing SA
92443 Issy-les-Moulineaux Cedex (FR)**

(72) Inventors:
• **VIGOUROUX, Jean-Ronan
F-35000 RENNES (FR)**
• **CHUPEAU, Bertrand
F-35700 RENNES (FR)**
• **STAUDER, Jürgen
F-35440 MONTREUIL/ILLE (FR)**

(74) Representative: **Le Dantec, Claude
Thomson
1, rue Jeanne d'Arc
92443 Issy-les-Moulineaux Cedex (FR)**

(56) References cited:
**EP-A- 0 400 881      US-A- 5 664 027
US-A1- 2003 016 883    US-B1- 6 263 097**

• FARROW G S D ET AL: "Detecting the skew angle
in document images" SIGNAL PROCESSING:
IMAGE COMMUNICATION, MAY 1994,
NETHERLANDS, vol. 6, no. 2, 1994, pages
101-114, XP000450543 ISSN: 0923-5965
• PETER HABERÄCKER: "Digitale
Bildverarbeitung - Grundlagen und
Anwendungen" 1985, CARL HANSER VERLAG
MÜNCHEN WIEN , XP002279457 paragraphe <<
16.2 Parallele Kantenextraktion >> page 314 -
page 315; figure 67
• YONGMEI WANG; HONGJIANG ZHANG:
"Content-based image orientation detection with
support vector machines" CONTENT-BASED
ACCESS OF IMAGE AND VIDEO LIBRARIES,
2001. (CBAIVL 2001), 2001, - 2001 pages 17-23,
XP010583701 USA
• ADITYA VAILAYA; HONGJIANG ZHANG;
CHANGJIANG YANG; FENG-I LIU; ANIL K:
"Automatic Image Orientation Detection" IEEE
TRANSACTIONS ON IMAGE PROCESSING, vol.
11, no. 7, 2002, - 2002 IEEE SERVICE CENTER,
PISCATAWAY, NJ, US

**Description**

The invention relates to a device and a method for detecting the orientation of an image.

The invention relates more generally to the automatic detection of the orientation of an image, that may possibly also contain text.

Like scanners, digital cameras generate photos which are often viewed on a screen, such as a computer screen. These images may be viewed correctly, that is to say in the right orientation or in a sense that does not allow the user to view them without having to turn his head to the left or to the right, or even to lower his head.

Specifically, sensing apparatus, such as digital cameras, can capture images in several senses, and in particular it is not uncommon for a user to take some of his photos in portrait mode and others in landscape mode. The photos thus taken are then transferred to a computer and all viewed in the same sense. Some will therefore be correctly viewed while others will require a 90, 180 or 270 degree rotation to be viewed correctly.

Certain sensing devices and in particular certain digital cameras possess orientation sensors that detect a rotation of the objective and transmit a rotation cue obtained from the sensor with the image. This allows the viewing device, by virtue of the rotation cue, to automatically perform a rotation of the image so that the latter appears in the correct sense.

Other devices use methods for extracting the low-level or high-level characteristics of the image. This makes it possible to analyse the content of the image in terms of colour, texture and also in terms of semantic content.

However, such devices are not robust for all types of images.

The invention relates more particularly to the automatic rotation of images in viewing devices not receiving any orientation cue from the sensing device and exhibiting particular geometries.

The invention relates to a method for detecting the orientation of an image.

According to the invention, the method comprises the steps as specified by claim 1.

When a landscape containing horizontal lines and vertical lines is looked at, in profile, the vertical lines remain vertical, whereas the horizontal lines are oblique.

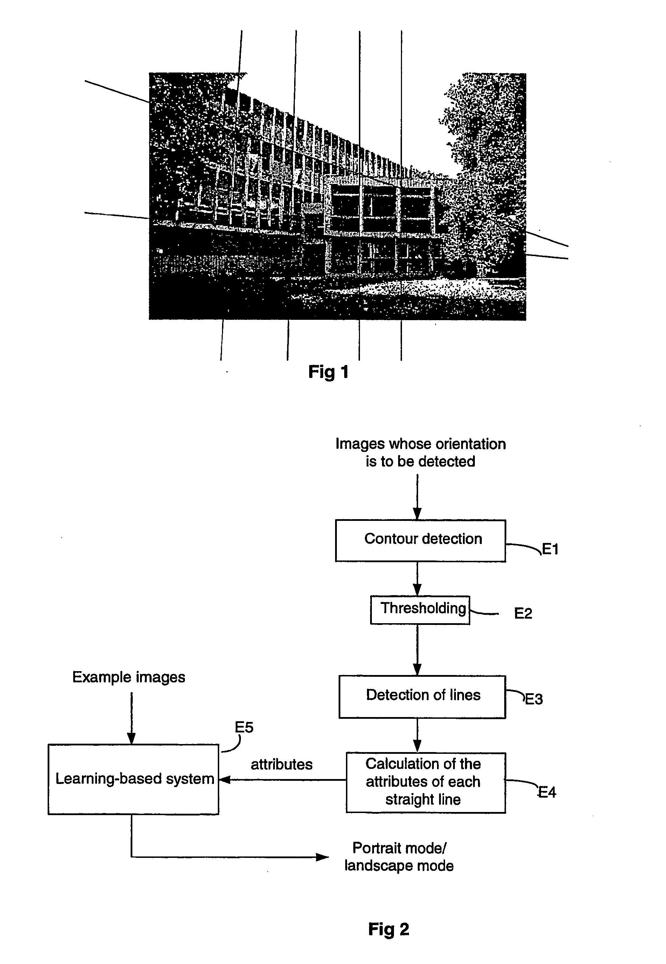

Thus, those photos containing a large percentage of vertical lines may be considered to be photos whose orientation is correct. On the other hand, those photos that contain a large percentage of horizontal lines may be considered to be photos that have to undergo a rotation in order to be viewed correctly. This is illustrated by Figure 1.

The method is particularly suitable for images containing several horizontal and vertical lines. It may, advantageously, be used as a supplement to known procedures of automatic detection of orientation.

The invention also relates to a device as specified by claim 2.

The invention also pertains to a computer programme product, characterized in that it comprises programme code instructions able to implement the method according to claim 1 when the programme is executed on a computer.

The invention will better understood and illustrated by means of advantageous exemplary embodiments and modes of implementation, which are in no way limiting, with reference to the appended figures in which:

- Figure 1 represents an image whose various horizontal and vertical lines have been highlighted,
- Figure 2 represents a preferred embodiment of the invention.

Figure 1 represents an image whose horizontal, vertical and oblique lines have been highlighted.

Figure 1 represents more particularly an image representing a building and therefore comprising a considerable number of horizontal and vertical lines.

Based on the fact that the photo was taken with a camera whose optical axis is situated in the horizontal plane, the effect of the perspective is that the vertical lines of the scene remain vertical, whereas the horizontal lines become oblique.

The horizontal lines of the building, for example the lines delimiting the windows and the roof, have become oblique in perspective. On the other hand, the vertical lines, delimiting the contours of the building and of the windows, have remained vertical.

The horizontal lines taken face-on remain horizontal.

Thus, the orientation of such a photo can be determined by calculating a percentage between the number of horizontal lines and the number of vertical lines. Indeed, this photo contains a considerable number of vertical lines, proportionally to the number of horizontal lines. It moreover contains a considerable number of oblique lines.

Figure 2 represents a flow chart of the operation of a method according to a preferred embodiment.

The method comprises a first step E1 of contour detection so as to isolate the various lines present in the image.

The detection of contours can be performed using various known procedures for detecting contours such as the procedu res of Prewitt, Sobel or Canny-Deriche. Such procedures are described, for example, in the book by Cocquerez and Philipp entitled "Analyse d'images; filtrage et segmentation [Image analysis: filtering and segmentation]", published in 1995 by Masson.

This operation consists in estimating the local variation in luminance. For each pixel of the image, a modulus of the luminance gradient is computed, that is to say the intensity of the variation in luminance in a small local neighbourhood around this point. The pixels with the largest modulus of gradient are then regarded as being on contours.

The contour detection step is followed by a thresholding step E2 making it possible to isolate the contours. During this step, the modulus of the luminance gradient of the points that have been detected during the previous step as forming part of a line, is compared with a threshold.

The threshold may be unique for the entire image or else it may vary as a function of the texture of the various regions of the image.

A watershed algorithm can also be applied to obtain the contours.

Following this thresholding operation, a binary image is obtained that represents partial contours, that is to say portions of curves.

Thereafter, it may turn out to be necessary to delete the contours obtained in the thresholding step that are too small, or else to connect the disjoint but close contours.

Next, the image is thereafter transformed during step E3 by using a Hough transformation so as to identify the lines in the image. The Hough transform is a conventional procedure for detecting simple shapes in an image. This procedure forms part of the family of voting algorithms and may for example be used to detect straight lines or circles.

This gives a set of lines aligned with the lines detected in the original image.

The next step consists in measuring the predominant orientation.

For each straight line detected in the image, a set of K attributes are computed during step E4 (number of points on the line, dispersion of the set of points, distances between points not connected so as to favour the lines that correspond to real objects, etc.) represented in the form of a vector of attributes F.

$$F = (f_k), k \in [1, K]$$

Each line can be weighted. The lines whose points are not actually aligned have little probability of being lines and can therefore undergo a weighting so as to be taken into account less in the orientation decision.

The orientation (or the inclination) of the lines is quantized, from 0 to $\pi$ and the measurements are grouped together by angular interval. Thus, for each angular interval i, a certain number $N_i$ of straight lines whose orientation lies in this interval is obtained.

This quantization is not uniform in so far as the interval $[0; \pi]$ is not divided into equal intervals but it is sliced up more finely around $\pi/2$, so as to accentuate the fact that we are searching for the lines having an orientation of about $\pi/2$.

The interval $[0; \pi]$ is divided into N intervals ($\alpha_i = 0$, $\alpha_n = \pi$).

$$[0, \Pi[ = \bigcup_{i=0}^{i=N-1} [\alpha_i, \alpha_{i-1}[$$

The intervals are not of equal size but are of smaller size around $\pi/2$.

The orientation of the image depends on the ratio of the number of horizontal to vertical lines. In order to take the decision, in this embodiment, use is made of a learning-based decision system, of neural network type. $F_n^i$ represents the attributes of straight line n in angular sector i.

The inputs of the decision system are for each angular segment $S_i = [\alpha_i, \alpha_{i+1}]$

- the number $N_i$ of straight lines detected in the angular segment,

- A vector of attributes $F_i$ dependent on the set of vectors of attributes of these straight lines $F_n^i$ ; $n \in [1, N_i]$

Also, by way of illustration in this embodiment, the mean of the $N_i$ vectors associated with each straight line detected in this interval, or any other function that summarizes these $N_i$ vectors into a single one.

These data collected for each interval constitute the inputs of a learning-based decision system such as a supervised classifier, for example a neural network. According to another embodiment, it is also possible to use a vector support machine (VSM) or any other technology belonging to the field of shape recognition.

The way in which such a system operates is described in the document "Statistical Pattern Recognition: A Review" by Anil K. Jain, Robert P. W. Duin and Jianchang Mao published in November 1999 in the IEEE Transactions volume, PAMI 22(1), pages 4-37, 2000.

The learning-based decision system is a system which models (step E5) example images in portrait or landscape mode and which thereafter deduces attributes therefrom. It can thus, as a function of the attributes, associate a portrait or landscape type with an incoming image. The attributes provided by the decision system are attributes identical to those provided as input to the decision system. This association is effected by comparing the vectors of attributes and thereafter, as a function of the value of the vectors of attributes, by comparing distance with the attribute vectors of the portrait class or of the landscape class. In this way, when it receives the vector of attributes as input, it can class, by comparison, the image into the portrait or landscape category as a function of the example images that it has modeled and of the vector of attributes of this image.

The VSMs model separation hyperplanes between the classes to be detected, either portrait or landscape: thereafter, depending on whether the attributes of a new image fall on one side or the other of the boundary between the two hyperplanes, the image is classed as portrait or landscape.

The method of detecting the orientation of an image such as proposed in the invention fits advantageously into known methods of detecting the orientation of an image. Specifically, this method is particularly advantageous for images containing a large percentage of horizontal, oblique and vertical lines but exhibits less attractive results for images containing only people or for example landscapes.

It is therefore attractive to combine this method with methods implementing steps of extracting high-level and low-level characteristics that are efficient for images exhibiting other types of content.

Methods of detecting colour, for example the colour of the sky, are among the methods of extracting low-level characteristics. This is described for example in Patent Application EP 1107182 filed in the name of Kodak Industry on 17 November 2000.

Procedures making it possible to detect faces in images which may subsequently allow the detection of the orientation of an image are known among methods of extracting high-level characteristics.

Depending on the content of the images, it is therefore advantageous to combine these procedures with the procedure according to the invention which is based on physical and geometrical properties of elements that may be present in the image.

**Claims**

1. Method for detecting the orientation of an image, said images being received from capture devices providing no orientation cue related to the captured images and said captured images being either captured in landscape mode or in portrait mode, some of the images having to be rotated to be displayed in the right mode, said method comprising the steps of:

   - Detection (E1) of contours

      - by calculating, for each pixel of the image, a modulus of the luminance gradient,
      - and determining as pixels belonging to contour, the pixels having the largest modulus of the luminance gradient,

   - thresholding the modulus gradient and obtaining a binary image representing partial contours,
   - identifying the straight lines in the image by applying a Hough transformation on said binary image,
   - computing a vector of attributes for each straight line detected, comprising the number of points in each straight line detected, the dispersion of the set of points, the distance between points not connected,
   - quantization of the orientation of the lines, from 0 to $\pi$ by angular intervals, obtaining for each angular interval i a number $N_i$ of straight lines whose orientation lies in this interval,
   - inputting to a learning-based decision system, for each angular interval i, the number $N_i$ of straight lines whose orientation lies in this interval, and a single vector of attributes for each angular interval summarizing the $N_i$ vectors of attributes of the $N_i$ lines of each interval,
   - said learning-based system classifying each image into portrait or landscape mode based on said vector of attributes.

2. Device for detecting the orientation of an image, said images being received from capture devices providing no orientation cue related to the captured images and said captured images being either captured in landscape mode or in portrait mode, some of the images having to be rotated to be displayed in the right mode, said device, comprising means for:

- Detecting (E1) the contours

i. by calculating, for each pixel of the image, a modulus of the luminance gradient,
ii. and determining as pixels belonging to contour, the pixels having the largest modulus of the luminance gradient,

- thresholding the modulus gradient and obtaining a binary image representing partial contours,
- identifying the straight lines in the image by applying a Hough transformation on said binary image,
- computing a vector of attributes for each straight line detected, comprising the number of points in each straight line detected, the dispersion of the set of points, the distance between points not connected,
- quantizating of the orientation of the lines, from 0 to $\pi$ by angular intervals, obtaining for each angular interval i a number $N_i$ of straight lines whose orientation lies in this interval,
- inputting to a learning-based decision system, for each angular interval i, the number $N_i$ of straight lines whose orientation lies in this interval, and a single vector of attributes for each angular interval summarizing the Ni vectors of attributes of the $N_i$ lines of each interval,
- said learning-based system classifying each image into portrait or landscape mode based on said vector of attributes.

**3.** Computer programme product, **characterized in that** it comprises programme code instructions able to implement the method according to Claim 1 when the programme is executed on a computer.

**Patentansprüche**

**1.** Verfahren zum Erfassen der Orientierung eines Bilds, wobei die Bilder von Erfassungsvorrichtungen empfangen werden, die keinen Orientierungshinweis in Bezug auf die erfassten Bilder bereitstellen, und wobei die erfassten Bilder entweder im Querformatmodus oder im Hochformatmodus erfasst werden, wobei einige der Bilder gedreht werden müssen, um im richtigen Modus angezeigt zu werden, wobei das Verfahren die folgenden Schritte umfasst:

- Detektieren (E1) von Umrissen

- **dadurch**, dass für jedes Pixel des Bilds ein Modul des Helligkeitsgradienten berechnet wird,
- und die Pixel mit dem größten Modul des Helligkeitsgradienten als die zum Umriss gehörenden Pixel bestimmt werden,

- Bilden des Schwellenwerts des Modulgradienten und Erhalten eines Binärbilds, das Teilumrisse darstellt,
- Identifizieren der Geraden in dem Bild durch Anwenden einer Hough-Transformation auf das Binärbild,
- für jede detektierte Gerade Berechnen eines Vektors von Attributen, der die Anzahl der Punkte in jeder detektierten Geraden, die Streuung der Menge von Punkten, die Entfernung zwischen unverbundenen Punkten umfasst,
- Quantisieren der Orientierung der Linien von 0 bis $\pi$ durch Winkelintervalle, für jedes Winkelintervall i Erhalten einer Anzahl $N_i$ von Geraden, deren Orientierung in diesem Intervall liegt,
- Eingeben für jedes Winkelintervall i der Anzahl $N_i$ von Geraden, deren Orientierung in diesem Intervall liegt, und für jedes Winkelintervall eines einzelnen Vektors von Attributen, der die $N_i$ Vektoren von Attributen der $N_i$ Linien jedes Intervalls summiert, in ein lerngestütztes Entscheidungssystem,
- wobei das lerngestützte System jedes Bild auf der Grundlage des Vektors von Attributen in den Hochformat- oder in den Querformatmodus klassifiziert.

**2.** Vorrichtung zum Erfassen der Orientierung eines Bilds, wobei die Bilder von Erfassungsvorrichtungen empfangen werden, die keinen Orientierungshinweis in Bezug auf die erfassten Bilder bereitstellen, und wobei die erfassten Bilder entweder im Querformatmodus oder im Hochformatmodus erfasst werden, wobei einige der Bilder gedreht werden müssen, um im richtigen Modus angezeigt zu werden, wobei die Vorrichtung Mittel umfasst zum:

- Detektieren (E1) der Umrisse

i. **dadurch**, dass für jedes Pixel des Bilds ein Modul des Helligkeitsgradienten berechnet wird,

ii. und die Pixel mit dem größten Modul des Helligkeitsgradienten als die zum Umriss gehörenden Pixel bestimmt werden,

- Bilden des Schwellenwerts des Modulgradienten und Erhalten eines Binärbilds, das Teilumrisse darstellt,
- Identifizieren der Geraden in dem Bild durch Anwenden einer Hough-Transformation auf das Binärbild,
- für jede detektierte Gerade Berechnen eines Vektors von Attributen, der die Anzahl der Punkte in jeder detektierten Geraden, die Streuung der Menge von Punkten, die Entfernung zwischen unverbundenen Punkten umfasst,
- Quantisieren der Orientierung der Linien von 0 bis $\pi$ durch Winkelintervalle, für jedes Winkelintervall i Erhalten einer Anzahl $N_i$ von Geraden, deren Orientierung in diesem Intervall liegt,
- Eingeben für jedes Winkelintervall i der Anzahl $N_i$ von Geraden, deren Orientierung in diesem Intervall liegt, und für jedes Winkelintervall eines einzelnen Vektors von Attributen, der die $N_i$ Vektoren von Attributen der $N_i$ Linien jedes Intervalls summiert, in ein lerngestütztes Entscheidungssystem,
- wobei das lerngestützte System jedes Bild auf der Grundlage des Vektors von Attributen in den Hochformat- oder in den Querformatmodus klassifiziert.

3. Computerprogrammprodukt, **dadurch gekennzeichnet, dass** es Programmcodeanweisungen umfasst, die das Verfahren nach Anspruch 1 implementieren können, wenn das Programm auf einem Computer ausgeführt wird.

**Revendications**

1. Procédé de détection de l'orientation d'une image, lesdites images étant reçues à partir de moyens de capture fournissant aucune indication d'orientation relative aux images capturées et lesdites images capturées pouvant être capturées en mode paysage ou en mode portrait, certaines desdites images devant être tournées pour être visualisées dans le mode correct, ladite méthode comprenant les étapes de :

- détection (E1) de contours

- En calculant, pour chaque pixel de l'image, un modulus du gradient de luminance,
- Et en déterminant comme pixels appartenant au contour, les pixels ayant le plus grand modulus de gradient de luminance,

- seuillage du modulus de gradient et obtention d'une image binaire représentant des contours partiels,
- identification des lignes droites dans l'image en appliquant une transformée de Hough à ladite image binaire,
- calcul d'un vecteur d'attributs pour chaque ligne droite détectée, comprenant le nombre de points dans chaque ligne droite détectée, la dispersion desdits points, la distance entre les points non connectés,
- quantification de l'orientation des lignes, de 0 à $\pi$ par intervalles angulaires, obtenant pour chaque intervalle angulaire i un nombre Ni de lignes droites dont l'orientation est dans cet intervalle,
- entrée dans un système basé apprentissage, pour chaque intervalle angulaire i, le nombre Ni de lignes droites dont l'orientation est dans cet intervalle et un unique vecteur d'attributs pour chaque intervalle angulaire résumant les Ni vecteurs d' attributs des Ni lignes de chaque intervalle, ledit système basé apprentissage classifiant chaque image en mode portrait ou paysage basé sur ledit vecteur d'attributs.

2. Dispositif de détection de l'orientation d'une image, lesdites images étant reçues à partir de moyens de capture fournissant aucune indication d'orientation relative aux images capturées et lesdites images capturées pouvant être capturées en mode paysage ou en mode portrait, certaines desdites images devant être tournées pour être visualisées dans le mode correct, ladite méthode comprenant des moyens de :

- détection (E1) de contours

i. En calculant, pour chaque pixel de l'image, un modulus du gradient de luminance,
ii. Et en déterminant comme pixels appartenant au contour, les pixels ayant le plus grand modulus de gradient de luminance,

- seuillage du modulus de gradient et obtention d'une image binaire représentant des contours partiels,
- identification des lignes droites dans l'image en appliquant une transformée de Hough à ladite image binaire,
- calcul d'un vecteur d'attributs pour chaque ligne droite détectée, comprenant le nombre de points dans chaque ligne droite détectée, la dispersion desdits points, la distance entre les points non connectés,
- quantification de l'orientation des lignes, de 0 à $\pi$ par intervalles angulaires, obtenant pour chaque intervalle angulaire i un nombre Ni de lignes droites dont l'orientation est dans cet intervalle,
- entrée dans un système basé apprentissage, pour chaque intervalle angulaire i, le nombre Ni de lignes droites dont l'orientation est dans cet intervalle et un unique vecteur d'attributs pour chaque intervalle angulaire résumant les Ni vecteurs d' attributs des Ni lignes de chaque intervalle,

Ledit système basé apprentissage classifiant chaque image en mode portrait ou paysage basé sur ledit vecteur d'attributs.

3. Produit programme d'ordinateur **caractérisé en ce qu'**il comprend des instructions de code de programme aptes à mettre en oeuvre le procédé selon la revendication 1 lorsque le programme est exécuté sur un ordinateur.

**Fig 1**

**Fig 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1107182 A

**Non-patent literature cited in the description**

- **Cocquerez ; Philipp.** Analyse d'images; filtrage et segmentation [Image analysis: filtering and segmentation]. 1995

- **Anil K. Jain ; Robert P. W. Duin ; Jianchang Mao.** Statistical Pattern Recognition: A Review. *IEEE Transactions volume,* November 1999, vol. 22 (1), 4-37